# EUROPÄISCHE PATENTSCHRIFT

(11) **EP 1 486 436 B1**
(45) Veröffentlichungstag und Bekanntmachung des Hinweises auf die Patenterteilung: **21.05.2008**
(21) Anmeldenummer: 04008675.3
(22) Anmeldetag: 10.04.2004
(51) Int. Cl.: B65G 23/28, B65G 21/20, B65G 15/22, B65G 15/58

(54) **Vorrichtung zum hängenden Transport von flächigen Werkstücken**
Device for the suspended transport of flat workpieces
Dispositif pour transporter des pièces plates de manière suspendue

(30) Priorität: 13.06.2003 DE 10327088
(43) Veröffentlichungstag der Anmeldung: 15.12.2004
(73) Patentinhaber: Sundwig GmbH, 58675 Hemer (DE)
(72) Erfinder: Giessler, Jürgen, 77948 Friesenheim (DE)
(74) Vertreter: Kaiser, Magnus

(56) Entgegenhaltungen:
- DE-A- 10 017 739
- US-A- 5 450 946

## Beschreibung

Die Erfindung betrifft eine Vorrichtung zum hängenden Transport von flächigen Werkstücken, insbesondere von Blechen und Platinen, nach dem Oberbegriff des Patentanspruchs 1.

Demnach umfasst die Vorrichtung einen Rahmen mit einer Anzahl von angetriebenen, umlaufenden Förderbändern, die, quer zur Förderrichtung verfahrbar, am Rahmen gehalten sind. Außerdem sind Haltevorrichtungen für die flächigen Werkstücke vorhanden, die den Förderbändern zugeordnet sind und entlang der Transportstrecke wirken. Die Haltevorrichtungen kompensieren die Schwerkraft und sind vorzugsweise an- und abschaltbar, während die Förderbänder den eigentlichen Transport der Werkstücke bewirken.

Derartige Vorrichtungen zum hängenden Transport von flächigen Werkstücken sind seit längerem bekannt. Die einzelnen Förderbänder laufen dabei normalerweise jeweils um einen Förderbandkörper um, der die Haltevorrichtung enthält. Diese ist meist entweder eine magnetische Haltevorrichtung, oder, wenn nicht-ferromagnetische Werkstücke transportiert werden sollen, eine Vakuumhaltevorrichtung. Eine magnetische Haltevorrichtung erzeugt Magnetfelder, die das Förderband durchdringen und die Werkstücke an das Förderband anziehen. Üblicherweise werden dabei Permanentmagnete eingesetzt, deren Magnetfelder mittels schaltbaren Elektromagneten bedarfsweise kompensierbar sind, um das ferromagnetische Werkstück gezielt loslassen zu können. Die Vakuumhaltevorrichtungen umfassen Unterdruckerzeuger, die mit Saugöffnungen in den Förderbändern korrespondieren und die Werkstücke durch Ansaugen am Förderband festhalten.

Ein typisches Einsatzgebiet für eine solche Transportvorrichtung ist das maschinelle Stapeln von automatisch gestanzten oder geschnittenen Blechen, deren Oberflächen nicht verkratzt werden sollen. Durch den hängenden Transport können Blechstücke vom Austragstransportband einer Trennmaschine sukzessive übernommen und oberflächenschonend übereinander abgelegt, also gestapelt werden. Das Stapeln erfolgt durch gezieltes Abwerfen der hängend transportierten Werkstücke an einer oder an mehreren Abwurfstellen.

Um eine Anpassung der vorliegenden Transportvorrichtung an flächige Werkstücke mit unterschiedlichen Abmessungen zu ermöglichen, sind die Förderbänder quer zur Förderrichtung verfahrbar und können somit bedarfsweise näher zusammengerückt oder weiter auseinandergefächert werden. Beim Transport von schmalen Werkstücken müssen zumindest zwei der vorhandenen Förderbänder sehr nahe nebeneinander angeordnet werden, damit die Bleche von jeweils zwei Förderbändern erfasst und transportiert werden. Denn die Gefahr von Störungen durch Abkippen oder Querstellen des Werkstücks ist bei einer Erfassung durch nur ein Förderband zu groß. Dagegen müssen die Förderbänder beim Transport von besonders breiten Werkstücken über die gesamte Breite des Werkstücks möglichst gleich verteilt, also deutlich voneinander beabstandet angeordnet werden, um die Gefahr von Störfällen zu minimieren und einen einwandfreien Transport zu gewährleisten.

Mit zunehmender Tendenz, insbesondere in der Automobilindustrie, werden nicht-ferromagnetische Materialien, wie beispielsweise Aluminiumbleche, maschinell hängend transportiert und gestapelt. In diesen Fällen werden Vakuumhaltevorrichtungen mit entsprechenden Saugbändern eingesetzt. Bei ferromagnetischen Werkstücken hingegen werden nach wie vor bevorzugt Magnethaltevorrichtungen verwendet. In jüngerer Zeit werden zunehmend kombinierte Transportvorrichtungen konzipiert, die wahlweise ferromagnetische Werkstücke mit Magnethaltevorrichtungen oder nicht-ferromagnetische Werkstücke mit Vakuumhaltevorrichtungen transportieren können, ohne lange Umrüstzeiten in Kauf nehmen zu müssen. Hierfür gibt es unterschiedliche Ansätze: Beispielsweise ist in der DE 196 36 086 A1 vorgeschlagen worden, eine magnetische Haltevorrichtung und eine Vakuumhaltevorrichtung an ein und demselben Förderband zu vereinen, um kombinierte Magnet-Saug-Förderbänder zu erhalten. Die EP 0 893 372 A1 geht einen anderen Weg: Dort wird eine Vorrichtung der eingangs genannten Art so ausgebildet, dass jeweils zwei Förderbänder an einer gemeinsamen Halterung angeordnet werden, wobei eines der Förderbänder mit einer Magnethaltevorrichtung und das andere mit einer Vakuumhaltevorrichtung versehen ist. Die beiden Förderbänder können durch vertikales Verschieben abwechselnd aktiviert und passiv gestellt werden.

Die DE 100 17 738 A1 der Anmelderin teilt die Förderbänder einer gattungsgemäßen Vorrichtung in zwei Gruppen auf, von denen die eine Gruppe mit Magnethaltevorrichtungen und die andere Gruppe mit Vakuumhaltevorrichtungen versehen ist. Die Förderbänder sind wenigstens gruppenweise seitlich so weit verfahrbar, dass sie in eine vom Antrieb abgekoppelte, seitliche Parkposition verbracht werden können. So werden nur diejenigen Förderbänder in den Transportweg verbracht, die nach dem Prinzip arbeiten, das den jeweils aktuellen Werkstücken angepasst ist. Durch eine jeweils frei verschiebbare Aufhängung der einzelnen Förderbänder mit zugeordneten Haltevorrichtungen mittels mindestens eines Manipulators, wie in der DE 100 17 739 A1 der Anmelderin offenbart, wird die Flexibilität einer solchen Vorrichtung bei konstruktiv einfachem Aufbau weiter erhöht.

Gemeinsam ist all diesen Vorrichtungen nach dem Stand der Technik, dass eine zunehmende Anzahl von Förderbändern synchron angetrieben werden muss. Weiterhin gemeinsam ist den bislang bekannten Transportvorrichtungen, dass der Antrieb der Förderbänder durch eine mechanische Kopplung zwischen den Förderbändern, nämlich mittels einer allen Förderbändern gemeinsamen Antriebswelle, erfolgt. Lediglich die in eine Parkposition verbrachten Förderbänder, wie sie aus der DE 100 17 738 A1 bekannt sind, werden von dieser gemeinsamen Antriebswelle abgezogen und somit vom Antrieb abgekoppelt.

Es liegt auf der Hand, dass das Prinzip der gemeinsamen Antriebswelle umso aufwendiger zu verwirklichen wird, je mehr Förderbänder gleichzeitig anzutreiben sind. Ebenso leuchtet ein, dass die gemeinsame Antriebswelle die flexible seitliche Verschiebbarkeit der Förderbänder, wie sie durch die aus der DE 100 17 739 A1 bekannte Aufhängung im Zusammenhang mit dem dort beschriebenen Manipulator erzielt worden ist, erschwert

Die US-A-5,450,946 beschreibt eine Vorrichtung mit zwei Förderbändern, von denen das Erste ortsfest mit einem Rahmen verbunden ist und das Zweite senkrecht zur Förderrichtung verschoben werden kann, um den Abstand zwischen den beiden Förderbändern zu ändern. Beide Förderbänder sind mit jeweils einem eigenen elektromotorischen Antrieb versehen, die elektronisch synchronisiert sind.

Der Erfindung liegt die Aufgabe zugrunde, eine Vorrichtung der eingangs genannten Art hinsichtlich ihres konstruktiven Aufwands und der flexiblen seitlichen Verstellbarkeit der Förderbänder weiter zu verbessern.

Gelöst ist diese Aufgabe durch eine Vorrichtung mit den Merkmalen des Patentanspruchs 1. Vorteilhafte Ausgestaltungen und Weiterbildungen der Erfindung sind in den Patentansprüchen 2 bis 7 niedergelegt.

Im Unterschied zum Stand der Technik, in dem der notwendige synchrone Antrieb der am Transportvorgang beteiligten Förderbänder durch eine mechanische Kopplung aller dieser Förderbänder mittels einer gemeinsamen Antriebswelle erfolgt, sind nach der Erfindung mindestens zwei einzelne Förderbänder oder Förderbandgruppen mechanisch entkoppelt und mit jeweils einem eigenen elektromotorischen Antrieb versehen. Diese elektromotorischen Antriebe sind erfindungsgemäß elektronisch synchronisierbar, so dass sie mittels einer elektronischen Steuerung absolut gleich laufen können. Hierdurch erübrigt sich die aufwendige mechanische Kopplung der Förderbänder untereinander. Selbstverständlich ist es jedoch auch möglich, einen oder einzelne elektromotorische Antriebe still zu legen, beispielsweise für eine Förderbandgruppe, die in einer Parkposition inaktiv gestellt ist.

Durch die vorliegende Erfindung verringert sich der mechanische Aufwand bei der Konstruktion einer Vorrichtung zum hängenden Transport von flächigen Werkstücken ganz erheblich. Auch beim Betrieb der Vorrichtung können durch die Erfindung Vorteile erzielt werden, da die mechanischen Reibungsverluste verringert werden.

Erfindungsgemäß sind jeweils zwei mechanisch gekoppelte Förderbänder mit einem elektromotorischen Antrieb versehen und bilden zusammen mit einer oder zwei Haltevorrichtungen eine solche Transporteinheit. Dadurch kann der elektromotorische Antrieb zwischen den beiden Förderbändern angeordnet werden und auf die mechanische Kopplung derselben wirken, wobei gleichwohl ein direkter Antrieb jedes einzelnen Förderbandes gewährleistet ist.

Wie oben bereits erwähnt, können die elektromotorischen Antriebe der einzelnen Transporteinheiten gruppenweise oder einzeln abschaltbar sein, um beispielsweise einzelne Transporteinheitgruppen passiv zu schalten, wenn sie insbesondere in einer seitlichen Parkposition geparkt sind. Selbstverständlich sollte die Möglichkeit gegeben sein, die elektromotorischen Antriebe der einzelnen Transporteinheiten jeweils untereinander zu synchronisieren, um einen genauen Gleichlauf der einzelnen beim Transport beteiligten Förderbänder zu gewährleisten.

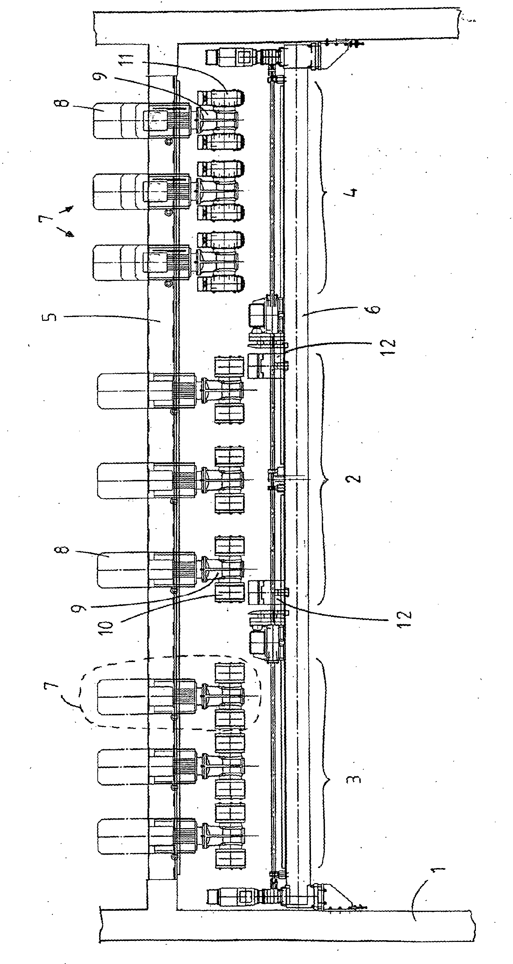

Ein Ausführungsbeispiel der vorliegenden Erfindung wird im folgenden an Hand der Zeichnung näher beschrieben und erläutert.

Die einzige Zeichnung zeigt ein Ausführungsbeispiel der funktionswesentlichen Teile einer erfindungsgemäßen Vorrichtung schematisch in stirnseitiger Ansicht. An einem Rahmen 1, der hier als Staplerbrücke ausgebildet ist, ist eine einen Transportbereich 2 sowie eine linke 3 und rechte Parkposition 4 überspannende Führung 5 sowie eine Quertraverse 6 angebracht.

An der seitlichen Führung 5 sind insgesamt neun Transporteinheiten 7 individuell seitlich verfahrbar befestigt, wobei die Transporteinheiten 7, die in der linken Parkposition 3 und im Transportbereich 2 angeordnet sind, jeweils aus einem elektromotorischen Antrieb 8, einem Getriebe 9 und zwei magnetischen Fördervorrichtungen bestehen, welche in bekannter Weise ein um einen hier nicht sichtbaren Förderbandkörper umlaufendes Förderband 10 und innerhalb dieses Förderbandkörpers angeordneten Permanentmagneten sowie schaltbare, zur Kompensation des Magnetfelds dienende Elektromagneten umfassen.

Die in der rechten Parkposition 4 befindlichen Transporteinheiten 7 bestehen demgegenüber wiederum aus einem elektromotorischen Antrieb 8 und einem Getriebe 9, jedoch nunmehr zwei Förderbändern 11 mit Vakuum-Einrichtungen und Saugöffnungen.

Die Quertraverse 6 ist mit einstellbaren Anschlagköpfen 12 zur seitlichen Führung der zu transportierenden Werkstücke versehen.

Zweckmäßigerweise sind nur die Antriebe 8 derjenigen magnetischen Transporteinheiten 7 aktiv und untereinander synchronisiert, die sich im Transportbereich 2 der Vorrichtung befinden und somit am Transport der Werkstücke beteiligt sind. Die Antriebe 8 der magnetischen Transporteinheiten 7 in der linken Parkposition 3 sowie die Antriebe 8 der Vakuum-Transporteinheiten 7 in der rechten Parkposition 4 bleiben ausgeschaltet.

## Patentansprüche

1. Vorrichtung zum hängenden Transport von flächigen Werkstücken, insbesondere von Blechen und Platinen, mit einem Rahmen (1), mit einer Anzahl von angetriebenen, umlaufenden Förderbändern (10, 11), die, quer zur Förderrichtung verfahrbar, am Rahmen (1) gehalten sind, sowie mit entlang der Transportstrecke wirkenden, den Förderbändern (10, 11) zugeordneten Haltevorrichtungen für die flächigen Werkstücke,
**dadurch gekennzeichnet,**
**dass** mindestens zwei jeweils einem Förderband (10, 11) oder einer mechanisch gekoppelten Förderbandgruppe zugeordnete, elektronisch synchronisierbare, elektromotorische Antriebe (8) vorhanden sind, wobei jeweils zwei mechanisch gekoppelte Förderbänder (10, 11) mit einem gemeinsamen elektromotorischen Antrieb (8) versehen sind.

2. Vorrichtung nach Anspruch 1,
**dadurch gekennzeichnet,**
**dass** die einzelnen Förderbänder (10, 11) mit je einer Haltevorrichtung und einem elektromotorischen Antrieb jeweils eine Transporteinheit (7) bilden, welche quer zur Förderrichtung verfahrbar am Rahmen (1) gehalten ist.

3. Vorrichtung nach Anspruch 1,
**dadurch gekennzeichnet,**
**dass** die jeweils zwei Förderbänder (10, 11) mit ihrem elektromotorischen Antrieb (8) und mindestens einer Haltevorrichtung jeweils eine Transporteinheit (7) bilden, welche quer zur Förderrichtung verfahrbar am Rahmen (1) gehalten ist.

4. Vorrichtung nach einem der Ansprüche 2 oder 3,
**dadurch gekennzeichnet,**
**dass** die elektromotorischen Antriebe (8) der einzelnen Transporteinheiten (7) gruppenweise oder einzeln abschaltbar und miteinander synchronisierbar sind.

5. Vorrichtung nach Anspruch 4,
**dadurch gekennzeichnet,**
**dass** die Transporteinheiten (7) aus einem Transportbereich (2) in mindestens eine seitliche Parkposition (3, 4) und umgekehrt verfahrbar sind.

6. Vorrichtung nach einem der Ansprüche 2 bis 5,
**dadurch gekennzeichnet,**
**dass** die Transporteinheiten (7) quer zur Förderrichtung mittels mindestens eines Manipulators einzeln verfahrbar und positionierbar sind.

7. Vorrichtung nach einem der Ansprüche 1 bis 6,
**dadurch gekennzeichnet,**
**dass** die Haltevorrichtungen Magnethaltevorrichtungen zum Erzeugen eines die Förderbänder (10) durchdringenden Magnetfeldes und/oder Vakuumhaltevorrichtungen mit Unterdruckerzeugern und korrespondierenden Saugöffnungen in den Förderbändern (11) sind.

## Claims

1. Device for the suspended transport of planar workpieces, especially metal sheets and flat bars, having a frame (1), having a number of driven, circulating conveyor belts (10, 11) which are mounted on the frame (1) so as to be movable transverse to the conveying direction, and having holding devices for the planar workpieces, which holding devices are effective along the transport path and are associated with the conveyor belts (10, 11),
**characterised in that**
there are at least two electronically synchronisable, electromotive drives (8) each associated with a conveyor belt (10, 11) or with a mechanically coupled group of conveyor belts, a set of two conveyor belts (10, 11) that are mechanically coupled being provided with a common electromotive drive (8).

2. Device according to claim 1,
**characterised in that**
the individual conveyor belts (10, 11) each form together with a holding device and an electromotive drive a transport unit (7) which is mounted on the frame (1) so as to be movable transverse to the conveying direction.

3. Device according to claim 1,
**characterised in that**
each set of two conveyor belts (10, 11) together with their electromotive drive (8) and at least one holding device forms a transport unit (7) which is mounted on the frame (1) so as to be movable transverse to the conveying direction.

4. Device according to either one of claims 2 and 3,
**characterised in that**
the electromotive drives (8) of the individual transport units (7) can be switched off groupwise or individually and are synchronisable with one another.

5. Device according to claim 4,
**characterised in that**
the transport units (7) are movable from a transport region (2) into at least one lateral parking position (3, 4) and *vice versa.*

6. Device according to any one of claims 2 to 5,
**characterised in that**
the transport units (7) are individually movable and positionable transverse to the conveying direction by means of at least one manipulator.

7. Device according to any one of claims 1 to 6,
**characterised in that**
the holding devices are magnetic holding devices for generating a magnetic field that penetrates the conveyor belts (10) and/or are vacuum holding devices having generators of reduced pressure and corresponding suction openings in the conveyor belts (11).

## Revendications

1. Dispositif pour transporter des pièces plates de manière suspendue, notamment des tôles et des platines, comprenant un cadre (1), un nombre de bandes transporteuses (10, 11) circulaires, entraînées qui sont maintenues de manière mobile transversalement au sens de transport sur le cadre (1), ainsi que des dispositifs de retenue agissant le long du parcours de transport, associés aux bandes transporteuses (10, 11) pour les pièces plates,
**caractérisé en ce que**
au moins deux entraînements (8) électromoteurs, pouvant être synchronisés électroniquement, associés respectivement à une bande transporteuse (10, 11) ou à un groupe de bandes transporteuses couplé mécaniquement sont présents, respectivement deux bandes transporteuses (10, 11) couplées mécaniquement étant pourvues d'un entraînement (8) électromoteur commun.

2. Dispositif selon la revendication 1,
**caractérisé en ce que**
les bandes transporteuses (10, 11) individuelles forment avec chacune un dispositif de retenue et un entraînement électromoteur respectivement une unité de transport (7), qui est maintenue de manière mobile transversalement au sens de transport sur le cadre (1).

3. Dispositif selon la revendication 1,
**caractérisé en ce que**
les respectivement deux bandes transporteuses (10, 11) forment avec leur entraînement (8) électromoteur et au moins un dispositif de retenue respectivement une unité de transport (7), qui est maintenue de manière mobile transversalement au sens de transport sur le cadre (1).

4. Dispositif selon l'une quelconque des revendications 2 ou 3,
**caractérisé en ce que**
les entraînements (8) électromoteurs des unités de transport (7) individuelles peuvent être mis hors circuit par groupe ou individuellement et peuvent être synchronisés les uns avec les autres.

5. Dispositif selon la revendication 4,
**caractérisé en ce que**
les unités de transport (7) peuvent être déplacées depuis une zone de transport (2) dans au moins une position de stationnement (3, 4) latérale et inversement.

6. Dispositif selon l'une quelconque des revendications 2 à 5,
**caractérisé en ce que**
les unités de transport (7) peuvent être déplacées et positionnées individuellement transversalement au sens de transport au moyen d'au moins un manipulateur.

7. Dispositif selon l'une quelconque des revendications 1 à 6,
**caractérisé en ce que**
les dispositifs de retenue sont des dispositifs de retenue magnétiques servant à générer un champ magnétique traversant les bandes transporteuses (10) et/ou des dispositifs de retenue à vide dotés de générateurs de dépression et d'ouvertures d'aspiration correspondantes dans les bandes transporteuses (11).
